Europäisches Patentamt

European Patent Office

Office européen des brevets

(11) Publication number: **0 242 346**
A2

# EUROPEAN PATENT APPLICATION

(21) Application number: 87850120.4

(22) Date of filing: **10.04.87**

(51) Int. Cl.⁴: **B 23 Q 1/28**, B 23 Q 3/12

(30) Priority: **17.04.86 SE 8601766**

(43) Date of publication of application: **21.10.87**
Bulletin 87/43

(84) Designated Contracting States: **CH DE FR GB IT LI SE**

(71) Applicant: **FFV Transmission Aktiebolag,**
**S-580 13 Linköping (SE)**

(72) Inventor: **Disborg, Lennart,, Storsvängen 16,**
**S-582 58 Linköping (SE)**

(74) Representative: **Avellan-Hultman, Olle, Avellan-Hultman**
**Patentbyra AB P.O. Box 5366, S-102 46 Stockholm 5 (SE)**

(54) **Apparatus for minimizing axial wabbling.**

(57) An apparatus for mounting of objects on a rotatable shaft (1) with a minimum of axial wabbling, and comprising a carrier, for instance a tool carrier in the form of a so called hydraulic clamp bushing having an outer sleeve (2) for carrying the object, for instance the tool, an inner sleeve (3) for being connected to the shaft (1) and for clamping the carrier onto the rotatable shaft (1), and between said two sleeves (2, 3) a closed chamber (4) which is filled with a hydraulic pressure medium (5) and which is adapted for being connected to means for varying, in particular increasing, the pressure of the hydraulic pressure medium (5), and in which the pressure medium chamber (4) with the hydraulic pressure medium (5) is formed so that basically only special parts (A) of the inner sleeve (3) are deformed when the hydraulic pressure medium (5) in the pressure medium chamber (4) is pressurized, whereas other parts (B) of the inner sleeve (3) remain substantially un-deformed and provide a guiding support for the carrier with respect to the rotatable shaft (1). The pressure medium chamber (4) can be arranged excentrically in relation to the shaft bore (10), or it may be arranged only over a part of the area round the shaft bore, whereby mainly only the part (A) of the inner sleeve having the thinnest wall or the pressure medium chamber (4) extending only partly round the shaft bore, respectively, is deformed and clamped to the shaft when the pressure medium (5) is pressurized, whereas the other parts remain un-deformed.

0242346

AVELLAN-HULTMAN PATENTBYRÅ AB
Box 5366, S-102 46 STOCKHOLM
Ref. P-1173

Applicant: FFV Transmission AB, Box 1120, S-581 11 LINKÖPING

Apparatus for minimizing axial wabbling.
------------------------------------------

The present invention generally relates to an apparatus for mounting of objects on a rotatable shaft, and the invention is more particularly directed to an apparatus of this type by means of which the object can be mounted so that there is no axial wabbling, or at least an optimum little wabbling, when the objects rotates together with the shaft.

In many technical structures, in which objects, for instance tools with a tool carrier, are mounted on a rotatable shaft it is of extreme importance that there are no axial wabbling when the shaft rotates together with the object. Especially when mounting objects having a short axial length it can be difficult to mount the object with the active rotating part perfectly at right angle to the axis of rotation, and in case of an oblique mounting in any direction axial wabbling appears in said active part when the shaft rotates together with the object mounted thereof. Such wabbling is disadvantageous in several respects, for instance it provides a wave-formed cut line, it provides shakings and vibration in the object worked with the tool, there is a lack of accuracy in the working etc.

In present connection the term rotatable objects includes all kinds of rotatable objects which are to perform any kind of work with a working part, referred to as the active rotatable part. The object may for instance be a carrier for a tool like a rotatable knife for cutting paper or metal plate, it may be a grinding wheel, a saw, a milling tool or any other tool, it may be a wire sheave or a belt pulley or any other rotatable object, or it may be an object which is to be worked, etc.

Of course, the problem with axial wabbling is increasing following a decreasing axial length, for instance in that the tool thereby gets a larger diameter of the active rotating part in relation to that of the rotatable shaft.

For such technical structures there are often requirements for the object to have a short axial length, and that the object can be mounted quickly and easily, and that the object should have a minimum of axial wabbling. The said requirements seem uncombinable, and priorly known structures do not provide a good solution of the problem.

According to the invention the rotatable object, for instance the tool, is formed as a clamp bushing having an outer sleeve and an inner sleeve and between said sleeves a recess which is filled with a pressure medium which can be pressurized, whereby a part of the inner sleeve is deformed so that the object becomes clamped on the shaft, whereas another part of the inner sleeve remains substantially undeformed and provides a guiding support for the object in relation to the rotatable shaft. Thereby the object can be mounted in that the object with the undeformed part thereof is lightly pressed into contact with the shaft, whereby the object takes a correct position, at the same time as the pressure medium in the recess is pressurized and the object is carefully mounted in the correct position on the shaft.

In a preferred emdbodiment of the invention the clamp bushing is formed with a pressure medium recess which extends all around but excentrically in relation to the bore of the rotatable shaft, or which is provided over only a part of the circumference of the rotatable shaft. In the first mentioned case the part or the inner sleeve which is located closest to the part having the least wall thickness will be deformed radially substantially much more than the parts having a greater wall thickness, and the parts of the inner sleeve having the greatest wall thickness therefore will provide a substantially unchanged support surface for the object with respect to the shaft. In the latter case, in which the wall thickness of the inner sleeve is constant the entire inner sleeve will be deformed radially in a way which will be described in detail in the following.

Further characteristics of the invention will be evident from the following detailed description in which reference will be made to the accompanying drawings which illustrate some embodiments of the invention.

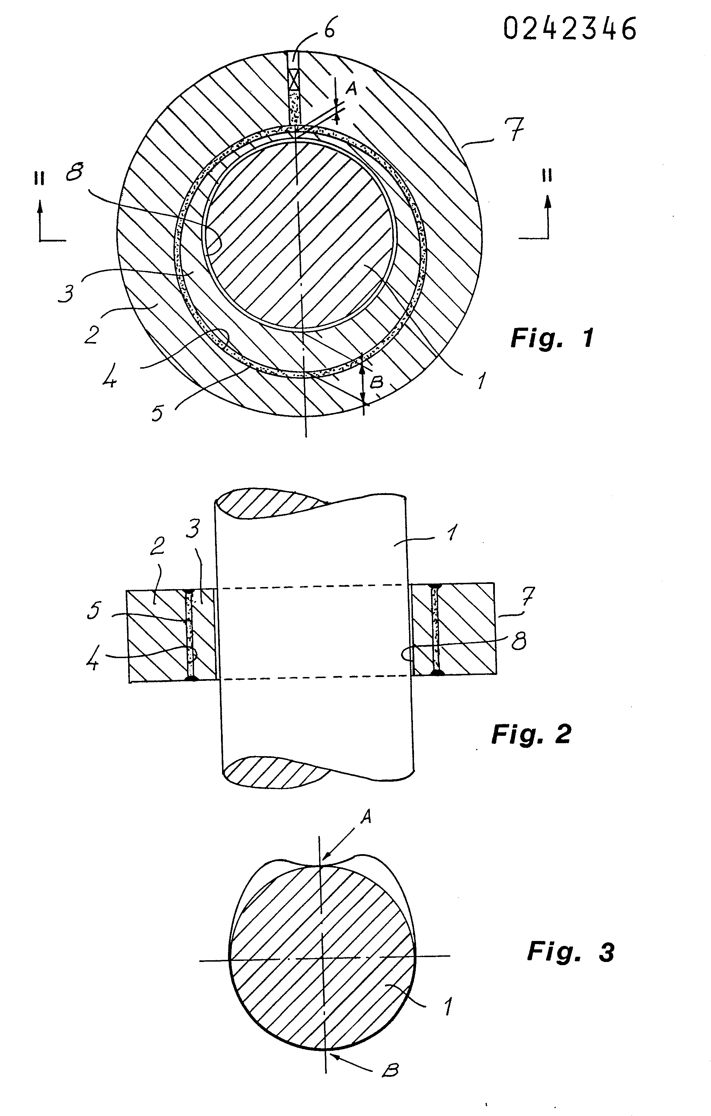

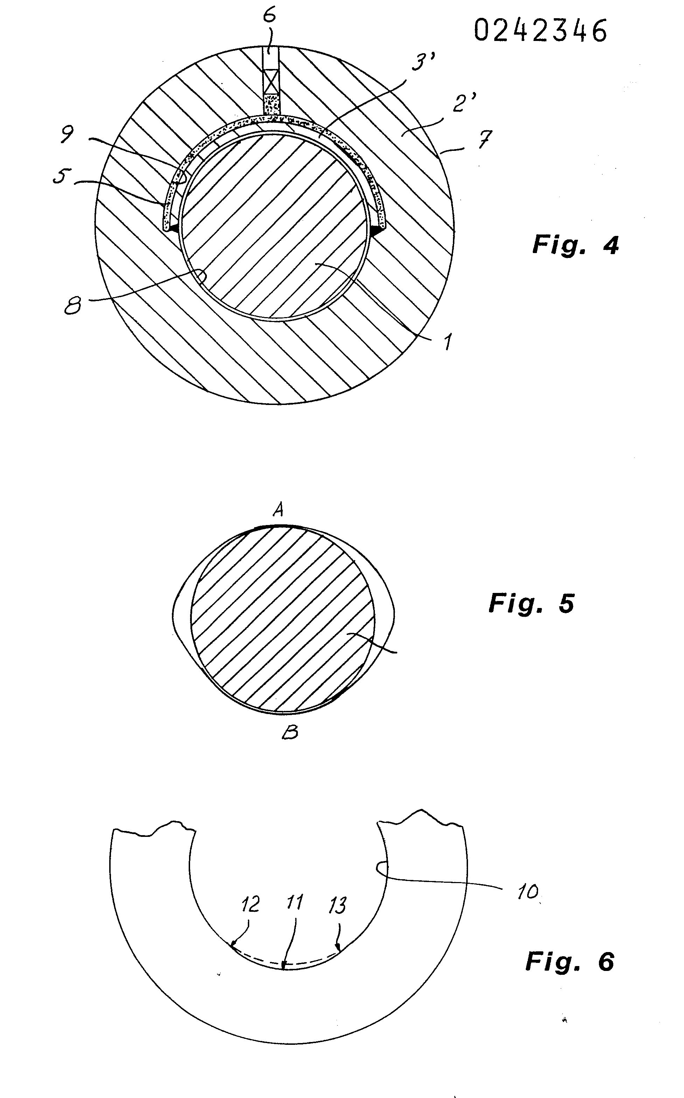

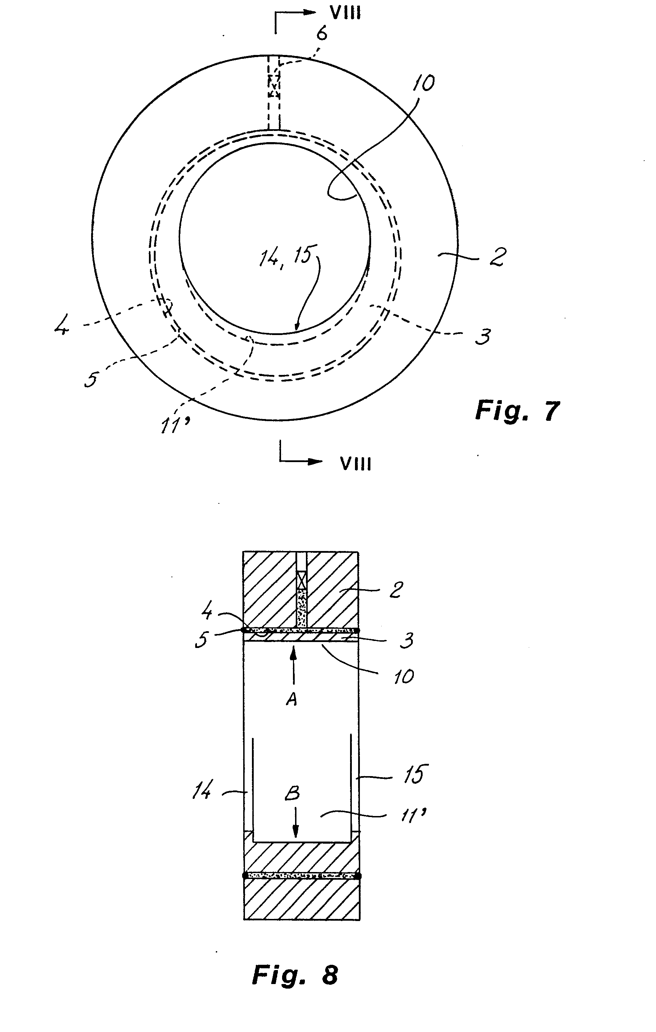

In the drawings figure 1 shows a cross section through a first embodiment of an apparatus according to the invention, and figure 2 shows an axial cross section through the same apparatus, as seen along line II-II of figure 1. Figure 3 illustrates, diagramatically and highly exaggerated, the deformation of the apparatus when being pressurized and mounted on a shaft. Figure 4 shows a cross section through a second embodiment of an apparatus according to the invention, and figure 5 shows, diagrammatically and highly exaggerated, the deformation of said last mentioned apparatus when being pressurized and mounted on a shaft. Figures 6 and 7 show further embodiments of arrangements according to the invention, and figure 8 is a cross section along line VIII-VIII of figure 7.

The apparatus shown in figures 1 and 2 may be a tool holder on which a tool (not illustrated) can be mounted and which in turn is adapted for being mounted on a rotatable shaft 1. The tool holder is formed as a so called hydraulic clamp bushing and comprises an outer sleeve 2 and an inner sleeve 3 providing therebetween a closed chamber 4 which is filled with a hydraulic pressure medium 5 of liquid type or preferably of paste formed nature. Via a copuling having a valve nipple the pressure medium chamber 4 is adapted for being connected to not-illustrated means for putting the pressure medium 5 under such pressure that at least some parts of the inner sleeve is deformed. The outer and inner sleeves 2 and 3 may, as known per se, be formed as separate sleeves which are weld connected to each other and which are formed with a slight play acting as the pressure medium chamber 4 when the sleeves are welded together. The outer surface 7 of the outer sleeve 2 acts a a carrier for a not-illustrated tool, and the inner sleeve 3 provides a shaft bore 8.

According to the invention the pressure medium chamber 4 is provided excentrically in relation to the shaft bore 8, so that the inner sleeve 3 has a smallest wall thickness A which is substantially less than its largest wall thickness B, for instance 3-4 times less. Preferably the valve nipple 6 is provided at or close to the thinnest part A of the inner sleeve.

When pressurizing the tool holder the inner sleeve 3 is deformed by radial compression, in the first place at and adjacent the thinnest part A thereof as indicated in figure 3. The thick part B, on the contrary, is not deformed to any noticeable extent, and said thick part provides a contact surface and a support for the shaft 1, which is pressed into contact with said part B depending on the compression of the inner sleeve at A.

The mounting of the tool holder on the shaft 1 can follow so that the tool holder is treaded onto the shaft 1 and is pressed into light contact with the shaft at the thick-part B of the inner sleeve, whereby it is possible to make sure that the carrier and said part of the shaft are in good contact with each other and thereby that the tool holder is mounted without wabbling risk. At the same time as the thick-part B of the inner sleeve is pressed into contact with the shaft the pressure medium chamber 4 is connected to a source of pressure medium, and thereby the inner sleeve is deformed at and adjacent the thin-part A as indicated in figure 3, and the tool holder is ridigly clamped on the shaft 1.

In the modified embodiment of the tool holder shown in connection to figures 4 and 5 the pressure medium chamber 9 is provided only round about half the circumference thereof. In this embodiment the pressure medium chamber 9 can be provided concentrically with the shaft bore 8, and since thus only one half of the tool holder is deformed the part A also in this case provides a deformation zone, whereas the part B provides a carrier and a guide for the shaft 1. The deformation is shown exaggerated in figure 5, and it is evident that contact is obtained both in a little area at and adjacent the point A and also over a large area at the carrier and guide part B, and that there is some curving outwards on opposite sides of the contact area A.

In the modified embodiment which is shown in figure 6 the shaft bore 10 of the inner sleeve is formed with an excentric recess 11 at the guide part B, which recess merges in the shaft bore 10 in the points 12 and 13. When mounting the tool holder on the shaft the said shaft will be in contact with the points 12 and 13 like in a V-block and therefore there is a very good guidance between the shaft and the tool holder.

In the embodiment of figures 7 and 8 the shaft bore 10 of the inner sleeve is likewise formed with an excenter recess 11' which has both a larger peripheral extension than the excenter recess of figure 6, in that it extends over substantially half the inner circumference, and is also narrower than the clamp bushing and is centered in the shaft bore as seen in the axial direction. Thereby the shaft bore provides three parts, namely the central excenter recess 11' and on both sides thereof a narrow edge part 14 and 15 respectively which accordingly have the same radius as the shaft bore 10.

It is to be understood that the shown and described embodiments are only of illustrating character, and that many different modifications and variations may be presented within the scope of the appended claims.

C L A I M S
-----------

1. Apparatus for mounting of objects on a rotatable shaft (1) with a minimum of axial wabbling, and comprising a carrier, for instance a tool carrier in the form of a so called hydraulic clamp bushing having an outer sleeve (2) for carrying the object, for instance the tool, an inner sleeve (3) for being connected to the shaft (1) and between said two sleeves a closed chamber (4) which is filled with a hydraulic pressure medium (5) and which is adapted for being connected to means for varying, in particular increasing, the pressure of the hydraulic pressure medium (5), **characterized** in that the pressure medium chamber (4) with the hydraulic pressure medium (5) is formed so that basically only special parts (A) of the inner sleeve (3) are deformed when the hydraulic pressure medium (5) in the pressure medium chamber (4) is pressurized, whereas other parts (B) of the inner sleeve (3) remain substantially un-deformed and provide a guiding support for the carrier with respect to the rotatable shaft (1).

2. Apparatus according to claim 1, **characterized** in that the pressure medium chamber (4) is provided excentrically in relation to the shaft bore (8) and the outer periphery of the carrier, whereby the deformable part (A) of the inner sleeve is located at and adjacent the thinnest part (A) of the inner sleeve (3), whereas the un-deformed part (B) of the inner sleeve is diametrically opposed thereto. (Figures 1-3)

3. Apparatus according to claim 1, **characterized** in that the pressure medium chamber (9) extends over only a part of the circumference of the carrier, for instance over between 90° and 180°, and whereby the deformable part (A) extends over substantially the entire pressure medium chamber (9), whereas the remaining part (B) of the carrier is un-deformable. (Figures 4-5)

4. Apparatus according to any of claims 1-3, **characterized** in that the centre of the deformable part (A) of the carrier is located substantially opposed to the centre of the un-deformable part (B).

5. Apparatus according to any of claims 1-4, **characterized** in that the inner sleeve is formed with an excentric recess (11) substantially in the middle of the un-deformable part (B), which recess has less radius than that of the shaft bore (10) and which merges into the shaft bore (10) over two spaced lines (12, 13) against which the shaft is in contact when the carrier is connected to the shaft and pressurized. (Figure 6)

6. Apparatus according to any of claims 1-4, **characterized** in that the inner sleeve is formed with an excenter recess (11') having less radius than that of the shaft bore (10), which recess extends over nearly 180° of the shaft bore (10) at the un-deformed zone and which is narrower than the clamp bushing as seen in the axial direction, and which in centered therein so as to provide a narrow edge (14, 15) on each side of the recess having the same radius as that of the shaft bore (10). (Figures 7, 8)

0242346

**Fig. 1**

**Fig. 2**

**Fig. 3**

0242346

Fig. 4

Fig. 5

Fig. 6

3/3

0242346

Fig. 7

Fig. 8